# EUROPEAN PATENT SPECIFICATION

(11) **EP 1 717 565 B1**
(45) Date of publication and mention of the grant of the patent: **12.11.2008**
(21) Application number: 05009226.1
(22) Date of filing: 27.04.2005
(51) Int. Cl.: G01J 3/46

(54) **Color selection method and system using semantic color names**
Verfahren und System zur Farbauswahl mittels semantische Farbnamen
Procédé et système de sélection de couleur utilisant des noms de couleur sémantiques

(43) Date of publication of application: 02.11.2006
(73) Proprietor: X-Rite Europe GmbH, 8105 Regensdorf (CH)
(72) Inventor: Lamy, Francis, 8832 Wollerau (CH)
(74) Representative: Schwabe - Sandmair - Marx

(56) References cited:
- US-A- 6 081 276
- US-B1- 6 591 007
- BERK, BROWNSTON AND KAUFMAN: "A New Color-Naming System for Graphics Languages" IEEE COMPUTER GRAPHICS AND APPLICATIONS, vol. 2, no. 3, May 1982 (1982-05), pages 37-44, XP009053348
- YING LIU ET AL: "Region-Based Image Retrieval with High-Level Semantic Color Names" MULTIMEDIA MODELLING CONFERENCE, 2004. MMM 2005. PROCEEDINGS OF THE 11TH INTERNATIONAL HONOLULU, HI, USA 12-14 JAN. 2005, PISCATAWAY, NJ, USA,IEEE, 12 January 2005 (2005-01-12), pages 180-187, XP010765653 ISBN: 0-7695-2164-9
- LAY J A ET AL: "Using color concepts in the retrieval of color artistry" CCECE 2003. CANADIAN CONFERENCE ON ELECTRICAL AND COMPUTER ENGINEERING. MONTREAL, CANADA, MAY 4 - 7, 2003, CANADIAN CONFERENCE ON ELECTRICAL AND COMPUTER ENGINEERING, NEW YORK, NY : IEEE, US, vol. VOL. 3 OF 3, 4 May 2003 (2003-05-04), pages 1175-1178, XP010654283 ISBN: 0-7803-7781-8
- KUTICS A ET AL: "Image retrieval via connecting words to salient objects" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 September 2003 (2003-09-14), pages 17-20, XP010670358 ISBN: 0-7803-7750-8

## Description

The invention relates to a color selection method and system according to the preambel of independent claims 1 and 8, respectively.

The invention generally pertains to the field of graphic arts. More specifically, it relates to the color selection process used during graphic design or product design.

The traditional process of color selection, as it is most commonly used by creative professionals, is based on navigating through a large array of color choices to find a color that matches the designers creative concept. Physical color palettes (e.g. Pantone, RAL, NCS), available as fan-decks or color books show an assortment of color chips and are commonly used by designers. Digital equivalents for some of these palettes are also available through design or color software. In this case, colors are selected by color name or color number from a pick list. Mechanisms based on named color lists can only establish a one-to-one relationship between colors and words.

Digital color pickers (not based on color books) are commonly used in graphics and design software (Adobe Photoshop, Microsoft Office) to select and specify color. Here the color choice is made from visual presentation or based on user-defined color values.

US-Patent 6,081,276 describes a method for creating a color name dictionary. A predetermined color space is identified. The predetermined color space is divided into a plurality of color space segments. A color name is assigned to each of the plurality of color space segments. A method and apparatus are provided for querying an image by color name. An image is acquired from an image source, such as an image database. A pixel is acquired from the acquired image. The acquired pixel is compared with a color name volume. A color name volume containing the acquired pixel is identified.

Publication "A New Color-Naming System for Graphics Language", IEEE Computer Graphics and Applications, vol. 2, no. 3, May 1982 (1982-05), pages 37-44, XP009053348 by Berk Brownston and Kaufmann describes a new color-naming system for graphics languages.

Publication "Region-based Image Retrieval with High-Level Semantic Color Names", Multimedia Modelling Conference, 2004. MMM 2004Proceedings of the 11th International Honolulu, HI, USA 12-14 Jan. 2005, Piscataway, NJ, USA, IEEE, 12 January 2005 (2004-01-12), pages 180-187, XP010765653 by Ying Liu et al. describes a region-based image retrieval with high-level semantic color names.

Publication "Using Color Concepts in the Retrieval of Color Artistry", CCECE 2003, Canadian Conference on Electrical and Computer Engineering, Montreal, Canada, May 4-7, 2003, Canadian Conference on Electrical and Computer Engineering, New York, NY : IEEE, US, vol. VOL. 3 of 4 May 2003 (2003-05-04), pages 1175-1178, XP010654283, ISBN: 0-7803-7781-8 describes a content-based retrieval in color by means of engines which perform a similarity matching, wherein semantic queries are used.

Publication "Image Retrieval Via Connecting Words To Salient Objects", Proceedings 2003 International Conference on Image Processing, ICIP-2003, Barcelona, Spain, Sept. 14-17, 2003, International Conference on Image Processing, New York, NY : IEEE,US; vol VOL 2 of 3, 14. September 2003 (2003-09-14), pages 17-20, XP010670358, ISBN: 0-7803-7750-8 describes a conceptual word mapping for image retrieval.

US-Patent 6,591,008 B1 describes a method and an apparatus for representing colored surfaces via a surface color code book.

### SUMMARY OF THE INVENTION

The invention is defined by the subject-matter of the independent claims. The dependent claims are directed to advantageous embodiments.

### ADVANTAGES OF THE INVENTION

Advantageously, the use of digital color tools is facilitated by making the color selection process more human-compatible. Advantageously, it is provided a method and a system which makes it possible to identify and present color selections based on a semantic input, preferably via a semantic software interface. Advantageously, it is provided a word-based search mechanism which makes it easier to translate a designer's inspiration to color selection. Yet another object of the invention is to provide a color identification system where the colors selected by using a color search engine have numeric color information associated with them so that the selected colors can be used by design software and color software used in production processes.

Most generally, the inventive method and system use colorimetric calculations, database querying, a semantic lexicon and color software tools to create the system. More details and advantages of the inventive method and system will become evident from the following detailed description of a preferred embodiment of the invention. The only figure is a schematic flow chart of the most important steps and functional units of the inventive method and system.

### DETAILED DESCRIPTION

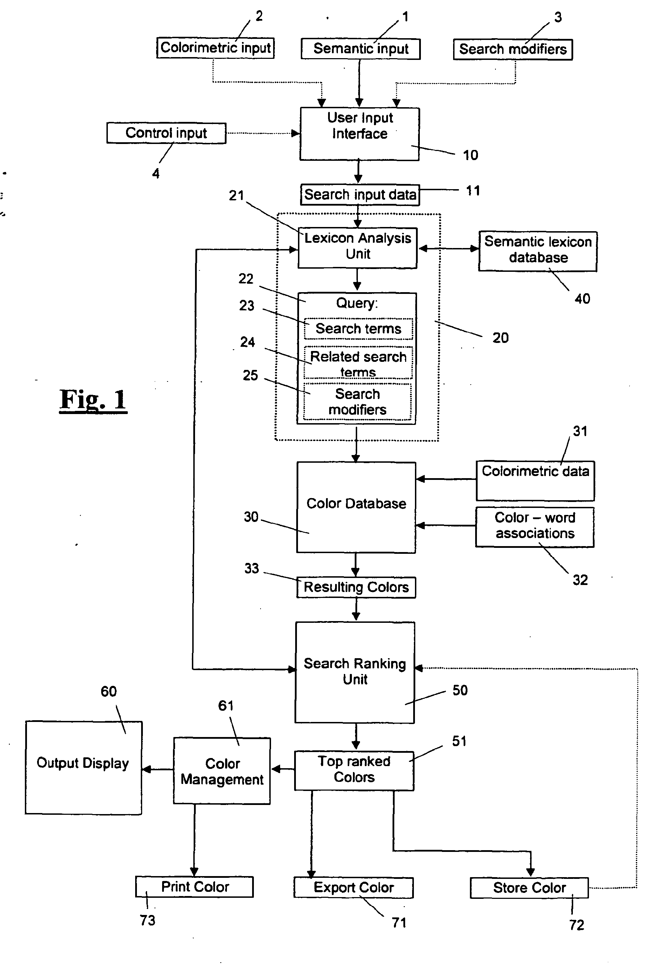

As illustrated in Fig. 1 the system basically comprises a user input interface 10, a query engine 20, a color database 30, a semantic lexicon database 40, a ranking unit 50 and a color display unit 60. The query engine 20, the color database 30, the semantic lexicon database 40 and the ranking unit 50 together can be referred to as a search engine.

The system receives semantic input data 1 and/or colorimetric input data 2 and, if desired, search modifying input data 3 from a user. The user input interface 10 converts these input data 1 and/or 2 and 3 into corresponding digital search input data 11. E.g. search terms could be keyed in or a voice interface via connectivity with speech-to-text engines could be used. The user input interface 10 provides for these input options in conventional manner. The system also receives control input data 4 for interactive control of functionalities such as selection of colors to be presented etc..

The color database 30 contains, among others, numeric colorimetric data 31 and color-word association data 32. The semantic lexicon database 40 contains word-word relationships describing semantic associations, typically words that are relevant to describing colors.

The query engine 20 comprises a lexicon analysis unit 21 which receives input semantic search terms and retrieves related semantic search terms 24 from the semantic lexicon database 40. The query engine 20 also builds a query 22 from the input search terms 23, the related search terms 24 and the search modifiers 25 (if any). The query engine further queries the color database 30 and retrieves resulting color data 33 from the color database 30 on the basis of the query 22.

The ranking unit 50 reduces the query result data 33 to a number of top ranked color data 51 according to predefined ranking rules thereby co-operating with the semantic analysis unit 21 and the the semantic lexicon database 40.

The colors defined by the top ranked color data 51 are visually (graphically) presented by the color display unit 60. A color management unit 61 may be provided for colorimetrically correct presentation of the colors. Selection of colors to be presented can be controlled by control input data 4. In addition, output means 71-73 are provided to allow for exporting, storing and printing of the top ranked colors 51. Stored colors can be used as input to the search ranking unit 50 to define user preferences..

The input interface 10, query engine 20, color database 30, semantic lexicon database 40, ranking unit 50, color display unit 60, color management unit 61 and output means 71-73 are typically implemented by a digital computer and its usual periphery in combination with suitably programmed software.

To find colors, a user enters words (semantic input data 1) as search terms. The search engine 20-50 returns a set of resulting colors associated with the word(s) entered. This set of colors is represented by result color data 33. Semantic search terms could be a part of commonly used color names (e.g. "olive") or may have a more indirect association with color (e.g. "fresh").

Additional search capability of the search engine could include syntax to search by typical colorimetric values e.g. RGB, Lab etc. (colorimetric input data 2) instead of words (semantic input data 1). So the user could enter "L=50.5 a=-20.6 b=12.5" instead of a string of words to search for colors on a purely numerical basis. The search engine could be designed to interpret typical search query syntax such as "and", "or", "+", "-" and quotes (" ") to further define the search. Special syntax to search for colors that are related to the search terms in a particular way could also be recognized by the search engine. For example to search for colors that are complementary to "blue" one could enter the search terms "c blue". These additional input options are symbolized in figure 1 by search modifying input data 3.

The color database 30 contains several information fields for each color. This could include color name, colorimetric information (e.g. spectral data, CIE L*a*b* values), associated word(s), color library name, color code, date defined, date measured, measurement code, specifier name, application method, seasonal association (e.g. spring, winter) etc.

In addition to semantic terms, a search could be further defined or refined by providing limiting values for any of the information fields. For example, this capability could be used to filter the search to just those colors that were produced by a certain application type or those colors that were defined in the last year or colors that were defined by a particular user. These additional input options too are symbolized in figure 1 by search modifying input data 3.

To build the color database 30, information could be compiled by several different methods. Available libraries of named colors along with the associated colorimetric data could be could be used in the the simplest implementation. To gain the complete benefits of the invention, additional words besides the color names need to be associated with each color. The association between words and colors could be defined based on input from color and design professionals. To build this association, users could be presented with a series of colors and asked to provide words in response to the colors. These words could, for example, be possible color names for that color, names of objects that come to mind, words that describe scenes that come to mind or words that describe a feeling associated with a color. The responses of all participants in such color-word association "experiment" are recorded. During this process, the participant could additionally select from a list of words provided by previous participants for the same color. This can increase the efficiency with which the color-word association can be built.

A lexical database, a thesaurus database or any other software tool that provides associated words could also be used to offer word choices related to the words already entered or selected by the participant. An efficient method to gather data about color-word associations is a key to making semantic color search possible. The use of additional tools like a voice interface and "auto-fill" of words based on entered text could also be helpful. Demographic information about participants could also be compiled to allow further segmentation of the data in the search process.

Yet another mechanism for populating the color database 30 would be by connectivity for users of color software who create and work with electronic color palettes using available software tools. Such users could have the option of saving their color palettes to a local or networked database. The ability to "publish" the color palettes with named colors will provide another data stream that builds the color database 30.

It is important to note that there is a many-to-many association between colors and words. There could be several words associated with a color and several colors associated with a word.

The use of a color database (that contains color-word relationships) along with a semantic lexicon database (that contains word-word relationships) is a very important feature of the present invention.

The semantic lexicon database 40 is used in "experiments" to establish color-word relationships for the color database 30. The participant is prompted with the option to select additional words that are related to words already keyed in by them in response to presented colors. This process makes it possible to efficiently gather color-word relationship data to populate the color database.

The semantic lexicon database 40 is also used to expand color search results beyond exact word matches. So if e.g. "hot" is entered, the search engine will also look for colors associated with e.g. "fire" since it knows that "hot" and "fire" are related from the lexicon database 40.

Finally, the lexicon database 40 also plays a role in ranking of search results. For example, if a color was associated with "hot" by one participant in the color database and it was associated with "fire" by another, that color will get a higher rank when searched for "hot". This is because the lexicon database validates and strengthens the relationship between these two words.

Since the number of colors and the number of words are extremely large, all of the color-word relationships cannot be easily and completely defined. This has prevented the practical implementation of a color search engine to date. If only a small table of color-word relationships is defined the search results will be unsatisfactory because relatively often 0 or only 1 hit will be found.

The skill in the inventive method is to expand the color-word relationships by using a supplementary table of word-word relationships. This table is implemented by the semantic lexicon database 40. So if one enters "hot" and that is not in the color database 30, one still gets a search result because there is a color with the related word "fire" in the database. This mechanism greatly reduces the probability of 0 hits.

In addition, the search engine can also use colorimetry to tackle the issue of color-color relationships. Since each of the colors have numeric color data associated with them (e.g. spectral data), it is possible to compute if two colors could be considered "neighboring" based on colorimetric distance between them. So if one is looking for "hot" and there is exactly one color with this word, the search engine will still offer the possibility of viewing an expanded selection of colors that are calculated to be neighbors of "hot". It is also possible to determine if the colors are "complementary" based on color computations.

The multiplication of relationships through word-word tables and color-color calculations allows for bringing in choice and offering a multiplicity of relevant hits from which the user can select. This is another important factor in creating a useful system.

For search result ranking (ranking unit 50), statistical measures can be used to determine the strength of association between a word and a color. The frequency with which a word (or similar words) are applied to a color (or similar colors) is calculated. The similarity of words is determined using lexical tools and by analyzing the word-color association collected from experiments conducted with design professionals. The selection of a certain color by the user from the search results could also be recorded and used later in calculating the strength of association between a word and a color, as indicated by the arrow connecting blocks 72 and 50 in Fig. 1.

The user could possibly assemble an entire color palette with a specified number of colors in one step by using a series of words in a single query. A method for calculating the composite rank for each color is used to build the palette of colors presented to the user as the search result.

Presentation of search results by the color display unit 60 could be in the form of a table of color chips with a RGB screen simulation of the colorimetric data associated with the color. Additional information fields for each of the color chips from the color database 30 could also be displayed. For cases where a large number of matching hits are found, colors that are within a certain colorimetric distance of each other could be grouped into a single mean color for initial display. The mean color could be expanded in a hierarchy to show its color members. These functionalities can be interactively controlled by the user by entering corresponding control input data 4.

Output of selected colors from the (ranked) search results are needed for use in design or application processes. Software tools to store the search results in a user-defined palette are provided (storing means 72). Exportation means 71 to export color data to commonly used color and graphics software are also provided. There could also be provided an option of viewing a history of stored search results. Printing and emailing of a HTML page with colors in different layouts from the browser is possible (printing means 73). The color management unit 61 provides for colorimetrically correct visual presentation and printing of the colors selected.

Collaborative color palette development is common in large organizations. Software for managing the workflow and finalizing the palette definition is a possible add-on for the inventive search engine. Browser-based methods will make it possible to easily review and refine a color palette interactively and collaboratively.

The invention is useful in the color selection process during graphic design or product design. The inventive method and system make it possible to select colors on the basis of a semantic search, i.e. a search based on words or numbers defined by the user, and to present ranked search results to the user, typically a creative professional. The use of digital color tools is facilitated by making the color selection process more human-compatible. The word-based search mechanism uses colorimetric calculations, database querying, a semantic lexicon and color software tools and thereby makes it easier to translate a designer's inspiration to color selection. The colors selected by using the color search engine have numeric color information associated with them. This enables use of the results by design software and color software used in production processes.

## Claims

1. A method of selecting and presenting a color choice made by a user comprising the steps of:
a) establishing a color database (30) for a number of individual colors, wherein each color is attributed to a set of data and each set of data comprises at least numeric data (31) and semantic data (32) related to the respective color, wherein the semantic data (32) are typical words that are relevant to describing colors and include semantic data that have an indirect association with the color,
b) establishing a semantic lexicon database (40) containing word-word relationships describing semantic associations that are relevant to describing colors,
c) providing input search terms (23) related to a desired color, said search terms (23) comprising at least semantic data,
d) using said semantic lexicon database (40) to determine related search terms (24), associated to the input search terms (23), said related search terms (24) providing alternative semantic associations to the desired color,
e) searching the color database (30) for resulting colors (33) with attributed data sets matching said input search terms (23) and/or said related search terms (24) and retrieving these resulting colors (33), and
f) producing a visual presentation of the resulting colors (33).

2. The method according to claim 1, wherein the input search terms (23) comprise colorimetric numerical data and wherein the color database (30) is searched for resulting colors (33) with attributed data sets matching said colorimetric numerical data.

3. The method according to any one of the preceding claims, wherein there are provided search modifying data (3) defining filter criteria and/or logical expressions of the input search terms (23) and wherein the color database (30) is searched for resulting colors (33) with attributed data sets matching said filter criteria and/or said logical expressions of said input search terms (23) and/or logical expressions of said related search terms (24).

4. The method according to any one of the preceding claims, wherein also colorimetrically neighboring colors are retrieved and visually presented, said colorimetrically neighboring colors being within a predefined colorimetric distance from said colors with attributed data sets matching said input search terms (23) and/or said related search terms (24).

5. The method according to any one of the preceding claims, wherein the resulting colors (33) are ranked according to predefined ranking criteria and only a limited number of highest ranked colors (51) are visually presented.

6. The method according to claim 5, wherein ranking is performed using said semantic lexicon database (40).

7. The method according to any one of the preceding claims, wherein a series of semantic input data (1) is provided as input search terms (23), and wherein on the basis of said series of semantic input data (1) an entire color palette with a specified number of colors is retrieved from the color database (30) and then visually presented.

8. A system for selecting and presenting a color choice made by a user comprising:
a) a color database (30) for a number of individual colors, wherein each color is attributed to a set of data and each set of data comprises at least numeric data (31) and semantic data (32) related to the respective color, wherein the semantic data (32) are typical words that are relevant to describing colors and include semantic data that have an indirect association with the color,
b) a semantic lexicon database (40) containing word-word relationships describing semantic associations that are relevant to describing colors,
c) an input interface (10) for entering input search terms (23) related to a desired color, said input search terms (23) comprising at least semantic data (1),
d) a semantic analysis unit (21) for retrieving from said semantic lexicon database (40) related search terms (24) associated to the input search terms (23), said related search terms (24) providing alternative semantic associations to the desired color,
e) a search engine (20-50) for searching the color database (30) and retrieving resulting colors (33), the attribute data sets of which match with said input search terms (23) and/or said related search terms (24), and
f) a display unit (60) for visually presenting the resulting colors (33) retrieved by the search engine (20-50).

9. The system according to claim 8, wherein the input interface (10) accepts search modifying data (3) defining filter criteria and/or logical expressions of the input search terms (23) and related search terms (24) and wherein the search engine (20-50) is able to search the color database (30) for resulting colors (33) with attributed data sets matching said filter criteria and/or said logical expressions of said input search terms (23) and said related search terms (24).

10. The system according to claim 8 or 9, further comprising a ranking unit (50) for ranking the resulting colors (33) according to predefined ranking rules and producing a reduced set of resulting colors (51) consisting of a limited number of highest ranked resulting colors.

11. The system according to claim 10, wherein the ranking unit (50) co-operates with the lexicon analysis unit (21).

12. The system according to any one of claims 8 to 11, further comprising exporting means (71) for exporting data related to the resulting colors (33,51).

13. The system according to any one of claims 8 to 12, further comprising storing means (72) for storing data related to the resulting colors (33,51).

14. The system according to any one of claims 8 to 13, further comprising printing means (73) for printing data related to the resulting colors (33,51).

15. The system according to any one of claims 8 to 14, further comprising a color management unit (61) for colorimetrically correct presentation and/or printing of the resulting colors (33, 51).

## Patentansprüche

1. Verfahren zum Wählen bzw. Auswählen und Darstellen einer Farbwahl bzw. Farbauswahl, die durch einen Nutzer gemacht wurde, die die Schritte aufweist:
a) Schaffen bzw. Herstellen einer Farbdatenbank (30) für eine Anzahl von individuellen Farben, wobei jede Farbe einem Datensatz zuzuordnen bzw. diesem zuzuschreiben ist und jeder Datensatz zumindest numerische Daten (31) und semantische Daten (32) aufweist, die mit der jeweiligen Farbe verwandt bzw. zu dieser zugehörig sind, wobei die semantischen Daten (32) typische Wörter sind, die relevant sind, um Farben zu beschreiben und semantische Daten beinhalten, die eine indirekte Verknüpfung bzw. Verbindung mit der Farbe aufweisen,
b) Schaffen bzw. Herstellen einer semantischen Lexikondatenbank (40), die Wort-zu-Wort-Beziehungen beinhaltet, die semantische Assoziationen bzw. Verknüpfungen oder Verbindungen beschreiben, die relevant sind, um Farben zu beschreiben,
c) Bereitstellen von Eingabesuchausdrücken (23), die mit einer gewünschten Farbe verwandt bzw. zu dieser zugehörig sind, wobei die Suchausdrücke (23) zumindest semantische Daten aufweisen,
d) Verwendung der semantischen Lexikondatenbank (40), um verwandte bzw. zugehörige Suchausdrücke (24) zu bestimmen, die mit den Eingabesuchausdrücken (23) verknüpft bzw. verbunden sind, wobei die verwandten bzw. zugehörigen Suchausdrücke (24) alternative semantische Assoziationen bzw. Verknüpfungen oder Verbindungen zu der gewünschten Farbe bereitstellen,
e) Suchen bzw. Durchsuchen der Datenbank (30), nach resultierenden Farben bzw. Ergebnisfarben (33), und zwar mit zugeordneten Datensätzen bzw. Datensätzen, die darauf zurückzuführen sind, die die Eingabesuchausdrücke (23) und/oder die verwandten bzw. zugehörigen Suchausdrücke (24) treffen bzw. erfüllen oder mit diesen übereinstimmen und Wiedergewinnung dieser resultierenden Farben bzw. Ergebnisfarben (33), und
f) Produzieren einer visuellen Präsentation bzw. Darstellung der resultierenden Farben bzw. Ergebnisfarben (33).

2. Verfahren nach Anspruch 1, wobei die Eingabesuchausdrücke (23) farbmetrische numerische Daten aufweisen, und wobei die Farbdatenbank (30) nach resultierenden Farben bzw. Ergebnisfarben (33) gesucht bzw. durchsucht wird, und zwar mit zugeordneten Datensätzen bzw. Datensätzen, die darauf zurückzuführen sind, die die farbmetrischen numerischen Daten treffen bzw. erfüllen oder mit diesen übereinstimmen.

3. Verfahren nach irgendeinem der vorherigen Ansprüche, wobei Suchmodifizierdaten (3) bereitgestellt werden, die Filterkriterien und/oder logische Ausdrücke der Eingabesuchausdrücke (23) definieren, und wobei die Farbdatenbank (30) nach resultierenden Farben bzw. Ergebnisfarben (33) gesucht bzw. durchsucht wird, und zwar mit zugeordneten Datensätzen bzw. Datensätzen, die darauf zurückzuführen sind, die die Filterkriterien und/oder die logischen Ausdrücke der Eingabesuchausdrücke (23) und/oder logischen Ausdrücken der verwandten bzw. zugehörigen Suchausdrücke (24) treffen bzw. erfüllen oder mit diesen übereinstimmen.

4. Verfahren nach irgendeinem der vorherigen Ansprüche, wobei auch farbmetrisch benachbarte Farben wiedergewonnen und visuell dargestellt bzw. präsentiert werden, wobei die farbmetrisch benachbarten Farben innerhalb eines vordefinierten farbmetrischen Abstandes von den Farben mit den zugeordneten bzw. zuzuschreibenden Datensätzen sind, die die Eingabesuchausdrücke (23) und/oder die verwandten bzw. zugehörigen Suchausdrücke (24) treffen bzw. erfüllen oder mit diesen übereinstimmen.

5. Verfahren nach irgendeinem der vorherigen Ansprüche, wobei die resultierenden Farben bzw. Ergebnisfarben (33) geordnet bzw. mit einem Rang versehen werden, und zwar nach vordefinierten Ordnungskriterien bzw. Rangkriterien, und nur eine begrenzte Anzahl der ranghöchsten Farben bzw. Farben mit dem höchsten Rang bzw. der höchsten Ordnung werden visuell präsentiert bzw. dargestellt.

6. Verfahren nach Anspruch 5, wobei das Ordnen bzw. Ranking durchgeführt wird unter Verwendung der semantischen Lexikondatenbank (40).

7. Verfahren nach irgendeinem der vorherigen Ansprüche, wobei eine Serie von semantischen Eingabedaten (1) als Eingabesuchausdrücke (23) bereitgestellt ist, und wobei auf der Basis der Serie von semantischen Eingabedaten (1) eine gesamte bzw. ganze Farbpalette mit einer spezifizierten Anzahl von Farben von bzw. aus der Farbdatenbank (30) wieder gewonnen wird und dann visuell präsentiert bzw. dargestellt wird.

8. System zum Wählen bzw. Auswählen und Präsentieren bzw. Darstellen einer Farbwahl bzw. Farbauswahl, die durch einen Nutzer gemacht wurde, das aufweist:
a) eine Farbdatenbank (30) für eine Anzahl von individuellen Farben, wobei jede Farbe einem Datensatz zugeordnet bzw. zuzuschreiben ist und jeder Datensatz zumindest numerische Daten (31) und semantische Daten (32) aufweist, die mit der jeweiligen Farbe verwandt bzw. zu dieser zugehörig sind, wobei die semantischen Daten (32) typische Wörter sind, die relevant sind, um Farben zu beschreiben, und semantische Daten beinhalten, die eine indirekte Verknüpfung bzw. Verbindung mit der Farbe aufweisen,
b) eine semantische Lexikondatenbank (40), die Wort-zu-Wort-Beziehungen beinhaltet, die semantische Assoziationen bzw. Verknüpfungen oder Verbindungen beschreiben, die relevant sind, um Farben zu beschreiben,
c) eine Eingabeschnittstelle (10), um Eingabesuchausdrücke (23) einzugeben, die verwandt mit bzw. zugehörig zu einer gewünschten Farbe sind, wobei Eingabesuchausdrücke (23) zumindest semantische Daten (1) aufweisen,
d) eine semantische Analyseeinheit (21), um von der semantischen Lexikondatenbank (40) verwandte bzw. zugehörige Suchausdrücke (24), die zu bzw. mit den Eingabesuchausdrücken (23) verknüpft bzw. verbunden sind, wobei verwandte bzw. zugehörige Suchausdrücke (24) alternative semantische Assoziationen bzw. Verknüpfungen oder Verbindungen zu bzw. mit der gewünschten Farbe bereitstellen,
e) eine Suchmaschine (20-50), um die Datenbank zu suchen bzw. zu durchsuchen, und um resultierende Farben bzw. Ergebnisfarben (33) wiederzugewinnen, wobei die zugeordneten Datensätze davon die Eingabesuchausdrücke (23) und/oder die verwandten bzw. zugehörigen Suchausdrücke (24) treffen bzw. erfüllen oder mit diesen übereinstimmen, und
f) eine Anzeigeeinheit (60), um die resultierenden Farben bzw. Ergebnisfarben (33) visuell zu präsentieren bzw. darzustellen, die durch die Suchmaschine (20-50) wiedergewonnen wurden.

9. System nach Anspruch 8, wobei die Eingabeschnittstelle (10) Suchmodifizierdaten (3) akzeptiert, die Filterkriterien und/oder logische Ausdrücke der Eingabesuchausdrücke (23) und verwandte bzw. zugehörige Suchausdrücke (24) definiert, und wobei die Suchmaschine (20-50) fähig bzw. geeignet ist, um die Farbdatenbank (30) nach resultierenden Farben bzw. Ergebnisfarben (33) zu suchen bzw. zu durchsuchen, und zwar mit attributierten bzw. zugeordneten Datensätzen, die die Filterkriterien und/oder die logischen Ausdrücke der Eingabesuchausdrücke (23) und der verwandten bzw. zugehörigen Suchausdrücke (24) treffen bzw. erfüllen oder mit diesen übereinstimmen.

10. System nach Anspruch 8 oder 9, weiter aufweisend, eine Ordnungseinheit (50), um die resultierenden Farben bzw. Ergebnisfarben (33) nach vordefinierten Ordnungsregeln bzw. Rangregeln zu ordnen bzw. eine Reihenfolge festzulegen, und um einen reduzierten Satz von resultierenden Farben bzw. Ergebnisfarben (51) zu produzieren, der aus einer begrenzten Anzahl der ranghöchsten resultierenden Farben bzw. Ergebnisfarben bzw. der resultierenden Farben bzw. Ergebnisfarben mit der höchsten Ordnung besteht.

11. System nach Anspruch 10, wobei die Ordnungseinheit (50) mit der Lexikonanalyseeinheit (21) zusammenarbeitet.

12. System nach irgendeinem der Ansprüche 8 bis 11, weiter aufweisend Exportmittel (71), um Daten, die zu bzw. mit den resultierenden Farben bzw. Ergebnisfarben (33, 51) verwandt bzw. zu diesen zugehörig sind, zu exportieren.

13. System nach irgendeinem der Ansprüche 8 bis 12, weiter aufweisend Speichermittel (72), um Daten, die mit den resultierenden Farben bzw. Ergebnisfarben (31, 51) verwandt bzw. zu diesen zugehörig sind, zu speichern.

14. System nach irgendeinem der Ansprüche 8 bis 13, weiter aufweisend Druckmittel (73), um Daten, die mit den resultierenden Farben bzw. Ergebnisfarben (33, 51) verwandt bzw. zu diesen zugehörig sind, zu drucken.

15. System nach irgendeinem der Ansprüche 8 bis 14, weiter aufweisend eine Farbmanagementeinheit bzw. Farbhandhabungseinheit (61), um die resultierenden Farben bzw. Ergebnisfarben (33, 51) farbmetrisch korrekt zu präsentieren bzw. darzustellen und/oder zu drucken.

## Revendications

1. Procédé de sélection et de présentation d'un choix de couleurs effectué par un utilisateur, comprenant les étapes consistant à :
a) établir une base de données de couleurs (30) pour plusieurs couleurs individuelles, chaque couleur étant affectée à un ensemble de données et chaque ensemble de données comprenant au moins des données numériques (31) et des données sémantiques (32) relatives à la couleur respective, les données sémantiques (32) étant des mots courants pertinents pour décrire des couleurs et comprenant des données sémantiques indirectement associées à la couleur,
b) établir une base de données de lexique sémantique (40) contenant des relations de mot à mot décrivant des associations sémantiques pertinentes pour décrire des couleurs,
c) fournir des termes de recherche d'entrée (23) relatifs à une couleur souhaitée, lesdits termes de recherche (23) comprenant au moins des données sémantiques,
d) utiliser ladite base de données de lexique sémantique (40) pour déterminer des termes de recherche voisins (24) associés aux termes de recherche d'entrée (23), lesdits termes de recherche voisins (24) fournissant d'autres associations sémantiques avec la couleur souhaitée,
e) effectuer une recherche dans la base de données de couleurs (30) pour trouver des couleurs résultantes (33) dont les ensembles de données affectés correspondent auxdits termes de recherche d'entrée (23) et/ou auxdits termes de recherche voisins (24) et récupérer ces couleurs résultantes (33), et
f) produire une présentation visuelle des couleurs résultantes (33).

2. Procédé selon la revendication 1, dans lequel les termes de recherche d'entrée (23) comprennent des données numériques colorimétriques et dans lequel une recherche est effectuée dans la base de données de couleurs (30) pour trouver des couleurs résultantes (33) dont les ensembles de données affectés correspondent auxdites données numériques colorimétriques.

3. Procédé selon l'une quelconque des revendications précédentes, dans lequel sont fournies des données de modification de recherche (3) définissant des critères de filtrage et/ou des expressions logiques des termes de recherche d'entrée (23) et dans lequel une recherche est effectuée dans la base de données de couleurs (30) pour trouver des couleurs résultantes (33) dont les ensembles de données affectés correspondent auxdits critères de filtrage et/ou auxdites expressions logiques desdits termes de recherche d'entrée (23) et/ou aux expressions logiques desdits termes de recherche voisins (24).

4. Procédé selon l'une quelconque des revendications précédentes, dans lequel les couleurs voisines au plan colorimétrique sont également récupérées et présentées visuellement, lesdites couleurs voisines au plan colorimétrique se trouvant à une distance colorimétrique prédéfinie desdites couleurs dont les ensembles de données affectés correspondent auxdits termes de recherche d'entrée (23) et/ou auxdits termes de recherche voisins (24).

5. Procédé selon l'une quelconque des revendications précédentes, dans lequel les couleurs résultantes (33) sont classées selon des critères de classement prédéfinis et seul un nombre limité des couleurs les mieux classées (51) sont présentées visuellement.

6. Procédé selon la revendication 5, dans lequel le classement est effectué au moyen de ladite base de données de lexique sémantique (40).

7. Procédé selon l'une quelconque des revendications précédentes, dans lequel une série de données sémantiques d'entrée (1) est fournie comme termes de recherche d'entrée (23) et dans lequel, en fonction de ladite série de données sémantiques d'entrée (1), une palette complète de couleurs dotée d'un nombre spécifique de couleurs est récupérée à partir de la base de données de couleurs (30) puis présentée visuellement.

8. Système de sélection et de présentation d'un choix de couleurs effectué par un utilisateur, comprenant :
a) une base de données de couleurs (30) pour plusieurs couleurs individuelles, chaque couleur étant affectée à un ensemble de données et chaque ensemble de données comprenant au moins des données numériques (31) et des données sémantiques (32) relatives à la couleur respective, les données sémantiques (32) étant des mots courants pertinents pour décrire des couleurs et comprenant des données sémantiques indirectement associées à la couleur,
b) une base de données de lexique sémantique (40) contenant des relations de mot à mot décrivant des associations sémantiques pertinentes pour décrire des couleurs,
c) une interface d'entrée (10) pour saisir des termes de recherche d'entrée (23) relatifs à une couleur souhaitée, lesdits termes de recherche (23) comprenant au moins des données sémantiques (1),
d) une unité d'analyse sémantique (21) pour récupérer à partir de ladite base de données de lexique sémantique (40) des termes de recherche voisins (24) associés aux termes de recherche d'entrée (23), lesdits termes de recherche voisins (24) fournissant d'autres associations sémantiques avec la couleur souhaitée,
e) un moteur de recherche (20-50) pour effectuer une recherche dans la base de données de couleurs (30) et récupérer des couleurs résultantes (33) dont les ensembles de données affectés correspondent auxdits termes de recherche d'entrée (23) et/ou auxdits termes de recherche voisins (24), et
f) une unité d'affichage (60) pour présenter visuellement les couleurs résultantes (33) récupérées par le moteur de recherche (20-50).

9. Système selon la revendication 8, dans lequel l'interface d'entrée (10) accepte des données de modification de recherche (3) définissant des critères de filtrage et/ou des expressions logiques des termes de recherche d'entrée (23) et/ou des termes de recherche voisins (24) et dans lequel le moteur de recherche (20-50) est capable d'effectuer une recherche dans la base de données de couleurs (30) pour trouver des couleurs résultantes (33) dont les ensembles de données affectés correspondent auxdits critères de filtrage et/ou auxdites expressions logiques desdits termes de recherche d'entrée (23) et desdits termes de recherche voisins (24).

10. Système selon la revendication 8 ou 9, comprenant en outre une unité de classement (50) pour classer les couleurs résultantes (33) selon des règles de classement prédéfinies et pour produire un ensemble réduit de couleurs résultantes (51) constitué d'un nombre limité des couleurs résultantes les mieux classées.

11. Système selon la revendication 10, dans lequel l'unité de classement (50) collabore avec l'unité d'analyse lexicale (21).

12. Système selon l'une quelconque des revendications 8 à 11, comprenant en outre des moyens d'exportation (71) pour exporter les données relatives aux couleurs résultantes (33, 51).

13. Système selon l'une quelconque des revendications 8 à 12, comprenant en outre des moyens de stockage (72) pour stocker les données relatives aux couleurs résultantes (33, 51).

14. Système selon l'une quelconque des revendications 8 à 13, comprenant en outre des moyens d'impression (73) pour imprimer les données relatives aux couleurs résultantes (33, 51).

15. Système selon l'une quelconque des revendications 8 à 14, comprenant en outre une unité de gestion des couleurs (61) pour assurer une présentation et/ou une impression correcte au plan colorimétrique des couleurs résultantes (33, 51).
